# EUROPEAN PATENT APPLICATION

(11) **EP 1 300 791 A1**
(43) Date of publication of application: **09.04.2003**
(21) Application number: 01948017.7
(22) Date of filing: 13.07.2001
(51) Int. Cl.: G06F 17/60

(54) **WORKFLOW SYSTEM**

(30) Priority: 13.07.2000 JP 2000213545
(71) Applicant: SUNTORY LIMITED, Osaka-shi, Osaka 530-8203 (JP); Suntory Logistics Limited, Osaka-shi, Osaka 530-8203 (JP)
(72) Inventor: NAKAGAWA, Kazuya, Hachiouji-shi, Tokyo 192-0913 (JP); ISHIDA, Tadafusa, Toyonaka-shi, Osaka 565-0082 (JP); HIJINO, Masayuki, Toshima-ku, Tokyo 170-0002 (JP); NOHARA, Hirotaka, Kokubunji-shi, Tokyo 185-0011 (JP); AIDA, Tsuyoshi, Ibaraki-shi, Osaka 567-0044 (JP)
(74) Representative: Stoner, Gerard Patrick
(86) International application number: JP0106108
(87) International publication number: WO02007026

(57) **Abstract**

A work managing system for managing B-to-B work wherein the reliability in control and the ease of operation are remarkably improved over the past. For this, the work managing system has a plurality of different work executing sites 4 for executing work assigned to them for an order received from an orderer 3 and a work control site 2 for instructing the progress of work to the plurality of work executing sites 4 and monitoring its progress while linking them with each other, where the work control site 2 and the work executing sites 4 exchange between those managing information relating to the instructions and monitoring of work through a communications network 5.

## Description

### TECHNICAL FIELD

The present invention relates to a technique for managing work relating to operations engaged in by a business etc., that is, a work process, more particularly a work managing system, a work flow processor suitable for installation in that system, a work flow messenger, a method of display of work information, a web page forming a display screen of a work flow processor, and a method of control of a work process.

More specifically, the present invention relates to a work managing system comprised of a plurality of different work executing sites for executing work assigned to them in the work process and a work control site for comprehensively and centrally controlling these work executing sites and relates to a work flow processor, work flow messenger, method of display of work information, web page, and method of control of a work process for the same. Here, a "work executing site" refers generally to a business performing certain work, a division of the same, an organization, etc.

### BACKGROUND ART

In commercial transactions to be handled between businesses, speed, accuracy, flexibility, and transparency of work are required for the commercial transactions. The size of a transaction is limited by the amount and nature of the information exchanged for realizing it.

In recent years, the advances in IT and the explosive spread of the Internet have led to the start of business-to-business electronic commercial transactions (B-to-B) using telecommunications networks, in particular the Internet. Business-to-business electronic commercial transactions greatly improve the speed, accuracy, flexibility, and transparency of work due to use of the Internet. The number of businesses engaged in such transactions are increasing in leaps and bounds. A scale of transactions as great as that of a so-called "industry process" has been realized. Improvement of the quality of transactions and in turn improvement of the cost performance of businesses are being achieved by this.

In for example bank settlement work and other transactions consisting of simple work, greater reliability in execution of the work is also secured.

A feature of the work process in the IT age is that it is a total system comprised of computer systems managing the work flow by just data and information obtained through data communications and human systems using that data and information and adding various functions or value by human actions such as operations, adjustment, confirmation, and instructions for change, that is, is truly comprised of interlinked computer systems and human systems. The reliable linkage of processes of work in this interlinked and coupled process area, consideration of conditions such as the time for executing processes, the contextual relationship of processes, and human judgment in executing work, reliable control of the work of human elements, and dynamic control of the work flow are major challenges in work processes enlarged by IT, that is, industry processes.

Here, a "work process" is work of a plurality of businesses executed while being consecutively linked. The work is linked for each work process by sharing of a platform serving as a site for businesses to execute their work. For example, in a logistics system, this is comprised of one or a combination of two or more of a shipment scheduling process, sales plan control process, distribution control process, production control process, purchasing control process, incoming order control process, outgoing order control process, inventory control process, delivery center and warehouse control process, distribution processing control process, dispatch control process, freight information control process, requested product information control process, product control process, and sales figure control process.

Giving an example of a work managing system for managing the above work processes, there is the "Integrated Transportation Arrangement System" which is the trade term in Japan registered as the trademark of "*Togohaisha*®" (hereinafter, Integrated Transportation Arrangement) System in the physical distribution field (see Japanese Unexamined Patent Publication (Kokai) No. 11-328573). In the Integrated Transportation Arrangement System, a transportation arrangement center (work control site) receiving requests for transportation order (order) of logistics items (products) from shippers (users) issues instructions for transportation arrangement to a carrier company having trucks (first work executing site) and ships large amounts of various types of products to different destinations while maintaining close contact with the receiving warehouse (second work executing site) or shipping warehouse (third work executing site) regarding the schedule of the transportation arrangement.

To overcome the above problems in business-to-business electronic commercial transactions (B-to-B) and execute a work process comprised of a plurality of consecutively linked work executed by different businesses such as in the Integrated Transportation Arrangement System, it is necessary to secure reliability in the speed, accuracy, flexibility, and transparency of work in the linkage among the businesses.

### DISCLOSURE OF INVENTION

Therefore, the present inventors engaged in repeated intense studies on a work managing system which treats computer systems and human systems as a total system in linkage of a work process, enables work of human elements to be reliably controlled, and enables control of the work flow so as to solve the above problem in business-to-business electronic commercial transactions and as a result constructed a system providing a work control site for configuring execution of the work process, setting work information for the work process such as in the Integrated Transportation Arrangement System, linking the work control site with a plurality of work executing sites executing the actual work and the work executing sites with each other, sharing the work flow as a whole as work information, treating the computer systems and human systems as a total system, and thereby enabling work information to be compulsorily and continuously instructed and monitored and thereby completed the present invention.

That is, an object of the present invention is to provide a work managing system which enables work to be instructed, its progress monitored, and managing information exchanged by notification and provision of work information from a work control site and responses (confirmation) to notifications from the work executing sites through the Internet or another communications means and, for facilitating and saving labor in operation of such a system, to provide a mechanism for work management and control, that is, a work flow processor, and a computer readable storage medium for the same, a mechanism for transmission of work information, that is, a work flow messenger, a method of display of work information, a web page to be provided for the work managing process, and a method of managing and controlling work of a work process.

To achieve the above object, the work managing system of the present invention has a plurality of different work executing sites (4) for executing work assigned to them for an order received from an orderer (3) and a work control site (2) for instructing the progress of work to the plurality of work executing sites (4) and monitoring its progress while linking them with each other, where the work control site (2) and the work executing sites (4) exchange managing information relating to the instructions and monitoring of the work through a telecommunications network (5).

According to the present invention, first, work is reliably executed and, second, the work information is transmitted simply and easily and therefore work can be managed easily and with less labor.

### BRIEF DESCRIPTION OF DRAWINGS

FIG. 1 is a view of the schematic configuration of a work managing system according to the present invention,
FIG. 2 is a view of the basic configuration of a work flow processor according to the present invention,
FIG. 3 is a view of the state of transition of the display of a web page,
FIG. 4 is an enlarged view of key parts of a notification screen when selecting the field "NOTIFY" in FIG. 3,
FIG. 5 is an enlarged view of key parts of a screen a2 of FIG. 3,
FIG. 6 is a view of the framework of work control by a processor 6,
FIG. 7 is a view of a work monitoring screen, and
FIG. 8 is a view of a work log screen.

### BEST MODE FOR CARRYING OUT THE INVENTION

Below, the present invention will be explained with reference to the drawings.

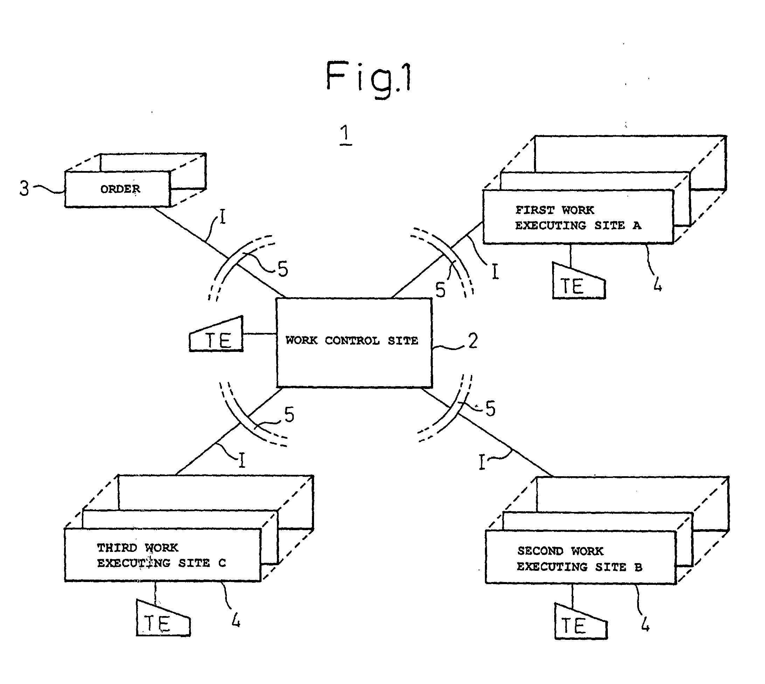

FIG. 1 is a view of the schematic configuration of a work managing system according to the present invention.

In the figure, a work managing system 1 is comprised of a work control site 2, an order 3 for work (order request) to the control site 2, a plurality of work executing sites (in the figure, as an example, three types of work executing sites (A, B, and C) shown) 4 given instructions for progress of work from the control site 2 based on the order, and a telecommunications network 5 for the transfer of managing information between the control site 2 and the executing sites 4.

Note that "TE" in the figure stands for "terminal equipment". In actuality, the above managing information is transferred through these terminals TE and the communications network 5. Further, the work executing sites 4 are not the same and are not particularly limited and may range from several dozen to several thousands of sites. The greater the number, the more remarkable the effect of the present invention.

In the embodiment to be explained in detail later, the explanation will be given taking as an example the above-mentioned Integrated Transportation Arrangement System as the work managing system. According to this example, the components 1 to 4 in FIG. 1 are as follows:
Working managing system 1 = Integrated Transportation Arrangement System
Work control site 2 = transportation arrangement center
Order 3 = shipper
First work executing site (A) 4 = carrier company
Second work executing site (B) 4 = receiving warehouse
Third work executing site (C) 4 = shipping warehouse

The components 1 to 4 according to the present invention may be explained in more detail as follows:
The work executing sites (A, B, and C) 4 execute work assigned to them for a given order (3),
the work control site 2 instructs the progress of work to the work executing sites 4 and monitors that progress while linking them'with each other,
while the work control site 2 and the work executing sites 4 exchange managing information I relating to the instructions and monitoring through the telecommunications network 5.

That is, the area of the work process handled in the present invention is the so-called (C-to-B)to-B-to (B-to-C) and includes, in addition to computer systems controlling the work flow based on data and information from data communications, human systems where various functions are used to add value by human actions of operations, adjustment, confirmation, and instructions for change using this data and information.

In more detail, the work control site 2 systematically plans and sets flows of execution of work to be assigned to the plurality of work executing sites 4 for a work process and instructs the progress of the set flows of execution and monitors the progress of the flows of execution. Here, "systematically ... for a work process" means taking into consideration the time series of the work, the contextual relationship of execution of work, the state of processing of work, and other limiting conditions of the flows of execution. The systematic plan of the flows of execution itself is used for individual work processes. For example, various plans can be realized based on statistics and logic. As one example, it is possible to draw up a plan using the techniques disclosed in Japanese Unexamined Patent Publication (Kokai) No. 11-328573 and Japanese Unexamined Patent Publication (Kokai) No. 2000-036093.

To realize the work control site 2 by more specific means, at least a work information displaying means, notification displaying means, and confirmation displaying means are necessary.

The work information displaying means provides work information set for the work executing sites 4 to the work executing sites 4, the notification displaying means notifies that work information to the work executing sites, and the confirmation displaying means confirms responses from the work executing sites 4 to notifications by the notification displaying means. Note that the work information is the content of the work and a work schedule relating to the progress of the work. The progress of work includes the status of the work, the interrelationship of work, and the contextual relationship.

To execute the above work management, it is preferable to use the Internet as the telecommunications network 5. In this case, the notification by the notification displaying means and the confirmation by the confirmation displaying means are conducted on web pages on the Internet (monitors of terminals TE).

Here, a "web page" is the screen displayed by browser software on the display unit of a terminal of a PC, mobile phone, or other terminal through the Internet or another communications network.

Further, a web page is used by the above work information displaying means to provide work information in synchronization with work information notified by the notification displaying means. When there is a notification from the notification displaying means, first this notification is informed by a signal of a mode of expression different from normal, the work executing site 4 side is prompted to click on a "notify" part of the notification displaying means to further open a web page displaying the work information relating to that notification, and, if necessary, it is prompted to click on a "provide" part of the work information displaying means to further open a web page displaying the work information relating to the provision of information.

That is, when a notification occurs, it is informed for example on the web page by a signal which makes the mode of expression of the text relating to the notification a mode of expression different from its surroundings. Due to this, notifications will no longer be overlooked and the instructions and monitoring of work information are reinforced. Here, a "mode of expression different from its surroundings" means that the text is displayed by a color not used in the surroundings (red, green, yellow, etc.) or the text is made to flash (repeatedly turn on and off).

Further, it is also possible to emit a sound or have the mobile phone speaker section or other unit vibrate. The point is that when there is a notification, that notification be forcibly made to the work executing site and the work executing site be made to notice that notification.

When there is provision of information by the work information displaying means as well, this is informed by a signal in the same way and the work executing site side is prompted to click on a "provide" part of the work information displaying means to further open the web page displaying the work information relating to the provision of information.

There is the following technique for when informing such an event by a signal on a web page. First, when a work executing site needs to be contacted, that information is written in a database in the work control site. A program (JAVA or plug-in software etc.) on the web page of the executing site refers to the database through a communication line at certain intervals (for example, at one-minute intervals) and, when contact is necessary, displays this on the web page by a mode of expression different from normal.

Further, the work control site 2 displays in parallel the flows of execution assigned to all of the work executing sites 4 and provides this in common to the web pages of the work executing sites 4. The work executing sites 4 can view the flows of execution for all work executing sites on their web pages and share the work information. This helps in gaining immediate understanding of one's own position in the flows of execution of work of the work executing sites and ensures the continuity of the instructions and monitoring of the work information.

Still further, when a vehicle breaks down or another unforeseen situation arises in for example the Integrated Transportation Arrangement System, that is, when there is a change in one or both of the content of work and work schedule, the work control site 2 can report this change all at once to the work executing sites 4. Alternatively, when requesting responses from the work executing sites 4 to the report, it can simultaneously receive a plurality of those responses.

According to the work managing system according to the present invention, (i) work is reliably executed and (ii) work information is transmitted simply and easily, therefore work can be managed easily with less labor. This effect will be clearer from the following explanation.

The work control site 2, which forms the heart of the work managing system 1, can be realized in actuality by introducing a work flow processor according to the present invention.

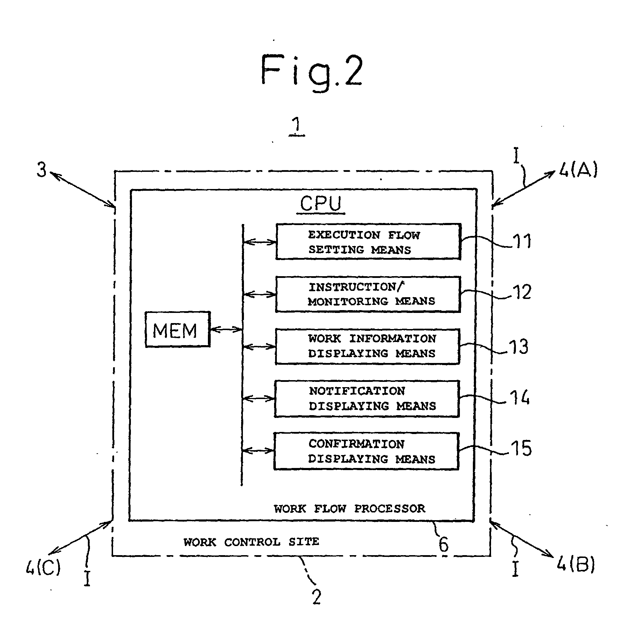

FIG. 2 is a view of the basic configuration of a work flow processor according to the present invention.

The work flow processor 6 shown in the figure is a work flow processor provided in a work managing system 1 including a plurality of different work executing sites 4 (A, B, and C) for executing work assigned to them for a given order 3. At its heart is a central processing unit (CPU) and ROM, RAM, or other memory (MEM).

The CPU operates together with the memory MEM overall and has the function of instructing the progress of work to the plurality of work executing sites 4 (A, B, and C) and monitoring the progress while linking them with each other and the function of exchanging managing information I relating to the instructions and monitoring with the work executing sites 4.

To perform these functions, the various means 11 to 15 shown in FIG. 2 are formed by the CPU.

First, provision is made of an execution flow setting means 11 for systematically planning and setting the flows of execution of work to be assigned to the plurality of work executing sites 4 for a work process and an instructing/monitoring means 12 for instructing the progress of the set flows of execution and monitoring the progress of the flows of execution. Provision of the means 11 and 12 is a basic precondition of the present invention. The means 11 may for example be realized using the technology disclosed in the above-mentioned Japanese Unexamined Patent Publication (Kokai) No. 11-328573 and Japanese Unexamined Patent Publication (Kokai) No. 2000-036093. Further, the means 12 may be realized by an ordinary programming technology.

What particularly characterize the present invention are the means 13 to 15 (work flow messenger).

The work information displaying means 13 has the function of providing to the work executing sites the work information set for those work executing sites 4 (A, B, and C). The notification displaying means 14 has the function of notifying the work executing sites 4 (A, B, and C) of the work information. The confirmation displaying means 15 has the function of confirming responses from the work executing sites 4 relating to the notification from the notification displaying means 14.

To ensure the functions explained above operate efficiently, it is preferable to use the Internet as the telecommunications network 5. Further, the notification by the notification displaying means and the confirmation by the confirmation displaying means 15 are performed on web pages on the Internet. Further, the instruction of the work information by the work information displaying means is performed on a web page in synchronization with the work information notified by the notification displaying means 14.

Here, an actual web page will be explained with reference to a drawing.

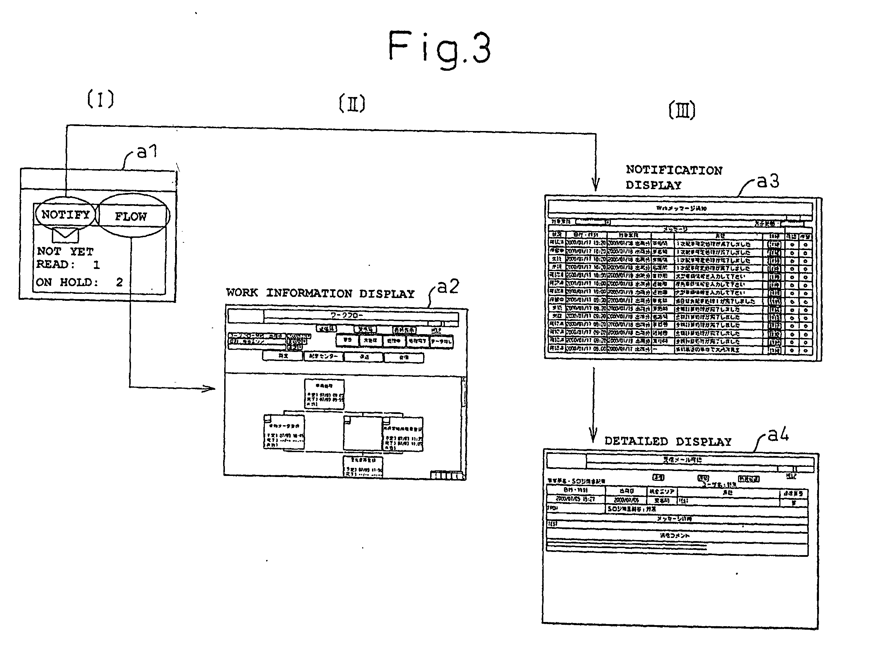

FIG. 3 is a view of the state of transition of the display of the web page.

In the figure, (I), (II), and (III) show a work information transmitting means, that is, a work flow messenger. They specifically show images of the stages of transition of a web page of a terminal TE at the work executing site 4 side.
(I) shows the initial state of the web page. A work flow initial screen a1 is displayed. What should be particularly noted in the screen a1 is that the "notify" part of the notification displaying means and the "provide" part of the work information displaying means are shown as "NOTIFY" and "FLOW". Due to the work flow messenger, the notification and provision of work information are performed simultaneously, so the instruction and monitoring of work information at the work managing system can be performed compulsorily and with continuity and the reliability of the progress of the work is secured.
   In the figure, the web pages opened when the fields "NOTIFY" and "FLOW" are clicked on are also shown.
(II) shows a work flow list screen a2 (work information display).
(III) shows a work notification screen a3 (notification display) and work content screen a4 (detailed display). The confirmation made at the notification display screen a3 is displayed on the web page of the control site 2 by the confirmation display means 15.

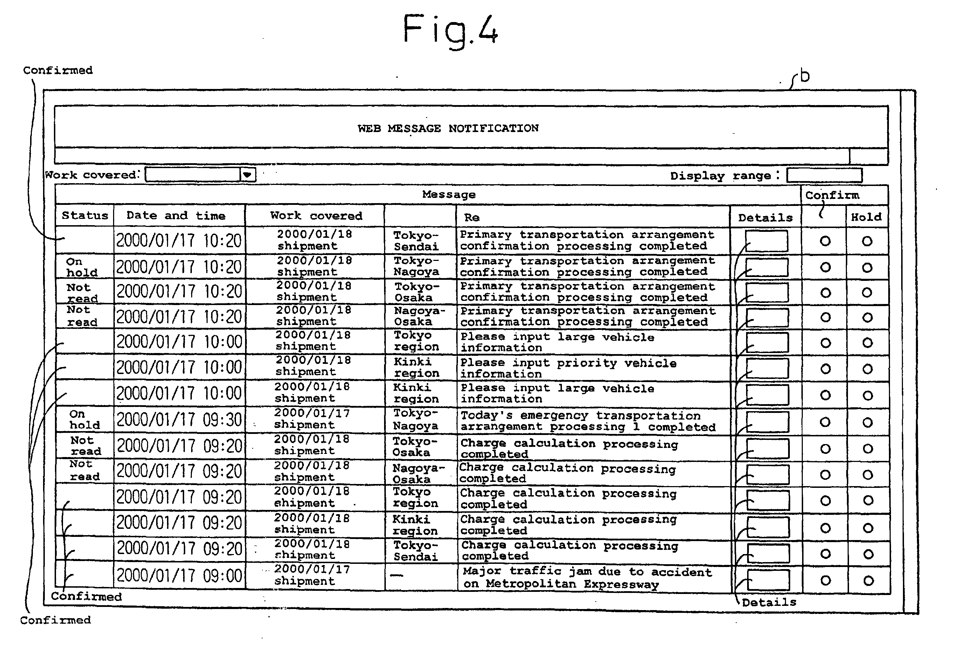

FIG. 4 is an enlarged view of key parts of a notification display screen a3 when selecting "NOTIFY" in FIG. 3.

In the figure, "b" shows the notification display screen. The heading of the screen "b" in this example is given as "web message notification". Various work information relating to instructions and monitoring is displayed. The work executing site 4 side opens the detailed display screen a4 in accordance with this screen, inputs the data, and returns a status report to the work control site 2 as a response. These responses are performed under the control of the confirmation displaying means 15. The control site 2 side can therefore confirm that the executing side 4 side has understood the work information of an instruction without error.

This operation comprised of pairs of notifications and confirmations is extremely effective in the reliable progress of work. Therefore, in particular for notifications, the text "NOTIFY" in the work flow initial screen a1 of FIG. 3 is made to flash or the work information is displayed by a different color from the surroundings until the work executing site opens it.

In this way, when there is a notification by the notification displaying means 14, the notification is displayed on the web page by a signal of a different mode of expression from normal to establish contact. Further, the work executing site 4 side is prompted to click on the "notify" part of the notification displaying means to further open a web page displaying the work information relating to the notification.

Further, in the example of FIG. 3, as shown in the screen a1, the number of messages not yet read ("Not yet read") and the number of cases where the message has been read, but the response to the control site 2 about it has been put "On hold" are shown.

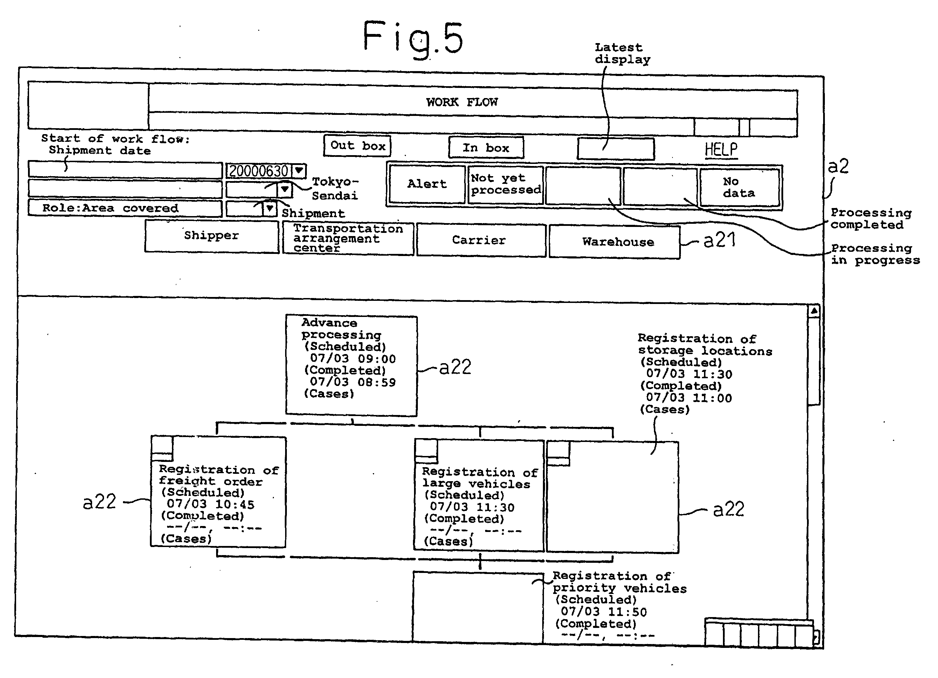

FIG. 5 is an enlarged view of key parts of a screen a2 of FIG. 3.

In the figure, "WORK FLOW" is shown as a specific example of the heading of the work flow list screen a2.

The work flow list screen a2 is characterized in that it shows in parallel the flows of execution assigned to the work control site 2 and all of the work executing sites and displays them in common on the web pages of the work executing sites.

As shown in the figure, the field a21 is divided into "Carrier (company)" and "Warehouse (company)" as work executing sites 4 and "Transportation arrangement center" as the work control site 2 and further "Shipper" as the order 3. Fields a22 of the flows of execution extend below them and are shown in parallel. The content of the display is the work information. The work information is one or both of the content relating to the work and the work schedule relating to progress of the work. As the work schedule, in the figure, "Scheduled (time)", "Completed (time)", etc. are shown.

Note that the fields a22 are displayed in various colors to enable the operator to get an understanding of the situation at one glance.

One example is as follows:
Alert (red): There is work for execution by one's self for which the scheduled time has passed (data to be processed).
Processing not yet started (yellow): There is work for execution which has not yet been processed (data to be processed).
Processing underway (orange): Part of the data has finished being processed.
Processing completed (blue): Completely finished.
No data (green): No data to be processed.

Further, it is also possible to set things up so that if a field a22 is clicked on, it will link to a detailed screen where the detailed content of the work can be viewed. Further, an "In box" and "Out box" are provided to enable transition to the notification display.

As explained above, flows of execution extend below the work entities in the field a21.

Referring to the figure, it will be understood that the flows of execution of the work entities (shipper, transportation arrangement center, carrier company, and warehouse company) are displayed in parallel on a single web page taking into consideration limiting conditions of the flows of execution such as the time series of the work, the contextual relationship of the execution of work, and the state of progress and processing of the work.

By displaying information in this way, the position of the role of each work entity itself under a single order can be easily understood. Therefore, whether the entire work flow is proceeding without trouble can be understood at a glance.

Input of data from the work entities (for example, the times of completion) can be reflected on the work flow list screen a2 in substantially real time, so all of the work entities can obtain a grasp of the current situation in real time. This is extremely good. For example, the warehouse company can determine the timing of the next scheduled reception and shipment of products from its own warehouse when shipment by the carrier company has been completed, so the warehouse company can prepare for its next job without any loss in time.

Mentioning another feature of the work flow processor 6, the work flow processor 6 is provided with the function of reporting any change in one or both of the content of work or the work schedule to the work executing sites 4 all at once and the function of simultaneously receiving responses from the work executing sites 4 to the report when required.

Further, if a vehicle of the carrier company breaks down, the managing information is immediately notified to the control site 2 through the web page. Receiving this, the work flow processor 6 rewrites the content of the field a22 of FIG. 5 in real time. That is, it displays the newly changed "Scheduled (time)".

What should be noted in this case is that the above change has an effect beyond just the carrier company and reaches all of the fields of all of the work entities positioned downstream from the field a22.

Therefore, when the prospects for the replacement truck for the broken down truck are determined, the work flow processor 6 corrects the "Scheduled (time)" for all downstream fields (simply adds the amount of time lost), rewrites the corrected time in to the fields of the related work entities, and updates the content of the work flow list screen a2 on the web pages of all of the work entities all at once.

Responses on action to deal with such quick changes are confirmed by the confirmation displaying means. When it is confirmed that a response has not yet been received, it is possible to deal with this by emergency measures such as a conventional telephone call or fax message.

Next, the framework of the control of work (transportation arrangement) by the work flow processor 6 of the work control site (transportation arrangement center) will be briefly explained.

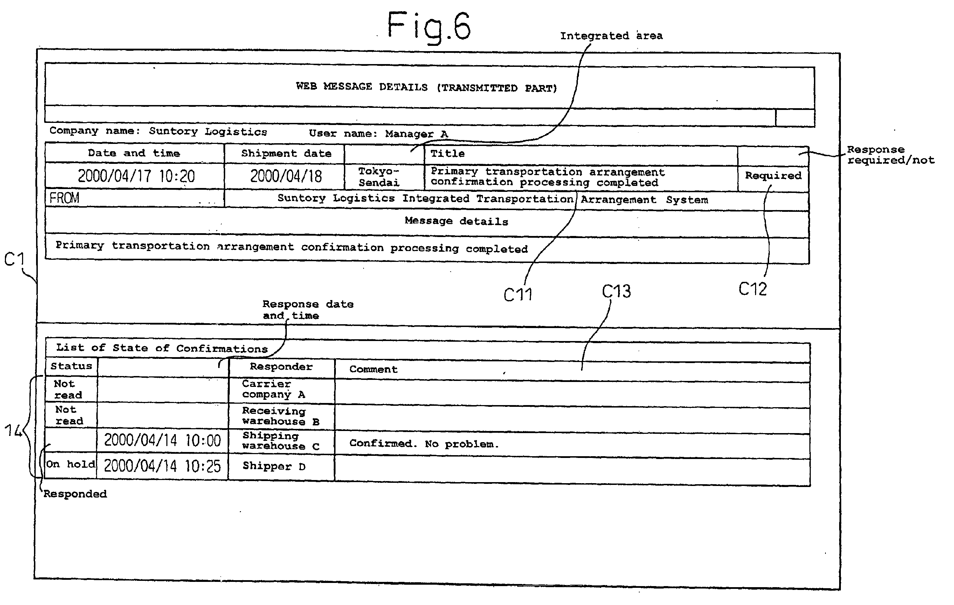

FIG. 6 is a view of the framework of work control by a processor 6.

The content shown in the figure is transmitted by the work flow processor 6 to the work entities and displayed on their web pages. The screen is the work control screen c1.

This screen c1 includes a field c11 showing there has been notification of the completion of the primary transportation arrangement (for example, transportation arrangement to be completed by 10:30 am), a field c12 showing that response (confirmation) is required, and a field c13 of the response comments. Further, a field c14 shows that the notification was sent to four companies.

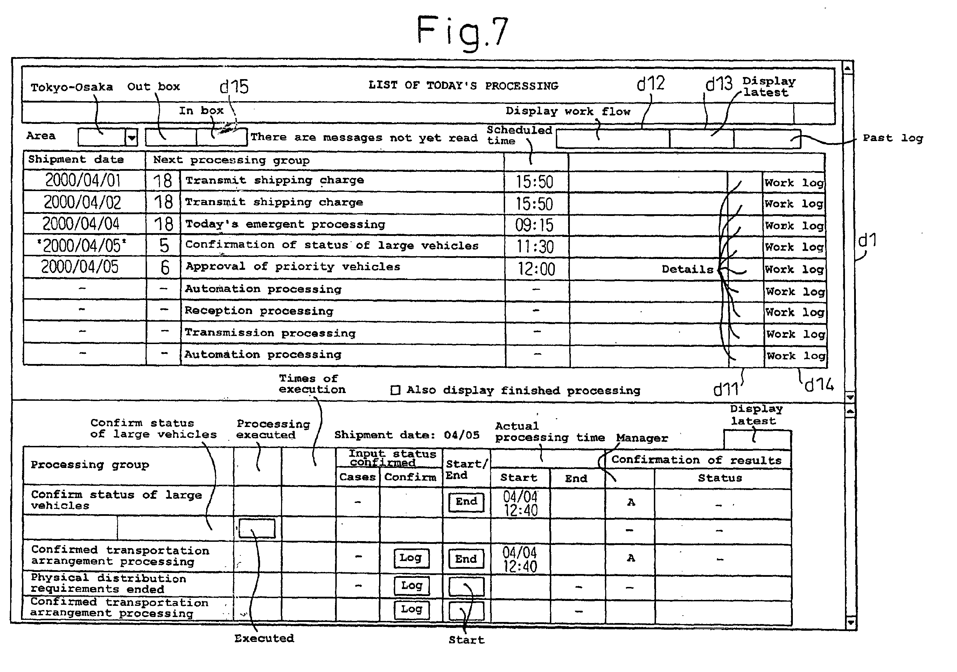

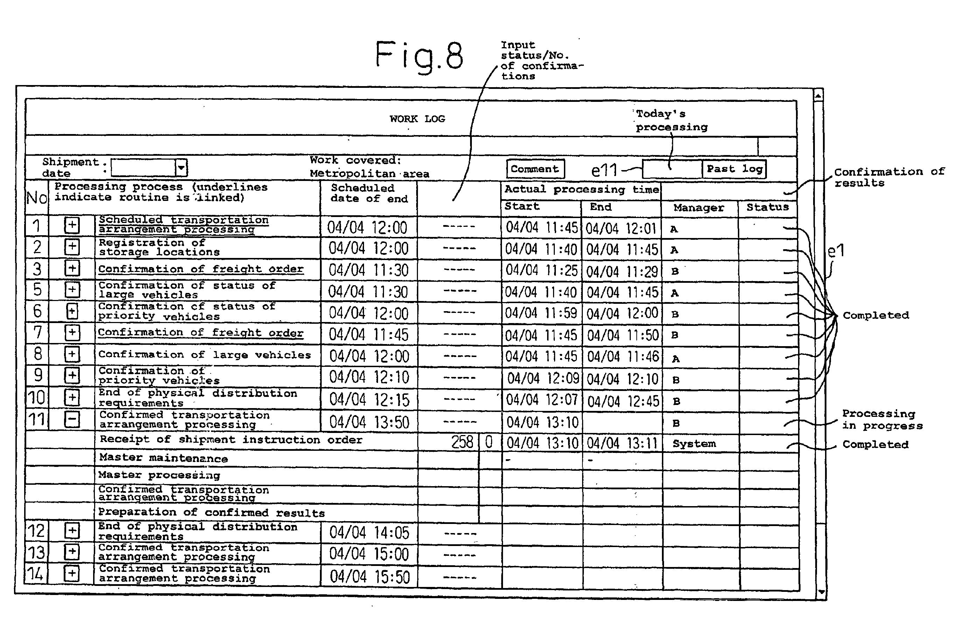

This type of control of work has to be performed together with the work schedule. That is, the work is managed in accordance with the set work process. This is shown in FIG. 7 and FIG. 8.

FIG. 7 is a view of a work monitoring screen, and

FIG. 8 is a view of a work log screen.

First, in FIG. 7, d1 is a work monitor, that is, a screen showing the list of the processing for that day. The sequence of the work which should be performed in one day can be grasped at one glance by this screen d1. The main fields in this screen are as follows:
Field d11 ("Details"): When this is clicked on, the details of the content of the work are displayed.
Field d12 ("Display work flow"): When this is clicked on, it links to the work flow list screen a2.
Field d13 ("Display latest"): When this is clicked on, the content of the display can be immediately updated.
Field d14 ("Work log"): When this is clicked on, the work log screen is opened.
Field d15 ("In box/Out box"): When this is clicked on, it links to the work control screen (web message notification) b (FIG. 4).

Next, referring to FIG. 8, the work log screen e1 is shown. This screen e1 is a screen which only the transportation arrangement center (work control site 2) can view.

When field e11 ("Today's processing") is clicked on, the work monitor screen of FIG. 7 is opened.

Here, the system configurations of the work flow display system and the work monitor system of the work flow viewing display screen a2 (FIG. 3) and the work monitor screen e1 (FIG. 7) will be explained in brief.

Looking at the work flow display system, first, a first database in the work control site is set in advance with the work flow information (which work is to be executed by who, when, in what order) for the work to be executed by the work executing sites through the execution flow setting means. Next, when an event (for example, the completion of work) occurs while the actual work is in progress, that information is written into a second database in the work control site. Then, the work information displaying means simultaneously refers to the first database and second database to confirm the state of progress of the work and displays the state of progress of the work (completed/not yet completed) at the current time on the "work flow list display screen".

Next, looking at the work monitor system, first, a third database in the work control site is set in advance with the work flow information (what work is to be executed when and in what order) for the work which the work control site controls through the execution flow setting means. Next, when an event (for example, the completion of work) occurs while the actual work is in progress, that information is written into a fourth database in the work control site. Then, the work information displaying means simultaneously refers to the third database and fourth database to confirm the state of progress of the work and displays the state of progress of the work (completed/not yet completed) at the current time on the "work monitor screen".

Next, an example of the case of actual application of the work managing system according to the present invention to for example the Integrated Transportation Arrangement System will be shown. Note that in actual application, large numbers of types of processing groups are dealt with as independent units in the execution of the work, but in this example typical ones will be selected from among them and shown as the following processing group no. 1 to processing group no. 11.

### No. 1: Registration of large vehicles

In work, use of as many large vehicles as possible leads to a reduction in distribution costs. First, the large vehicles which can be utilized that day are registered at the center from the carrier companies.

### No. 2: Registration of priority vehicles

Vehicles which can be used inexpensively in view of their operating state are registered with priority.

### No. 3: Registration of requested freight

Shippers make requests for shipment of freight to the transportation arrangement center and register these there.

### No. 4: Registration of storage location

The warehouse companies assign branch numbers to warehouses and register the same.

Here, the above and below registrations can be performed through the web pages in this example.

The warehouses storing the freight are quickly informed to the transportation arrangement center through the web pages. The transportation arrangement center notifies the related carrier companies through the web pages.

The arrangements for an order from an shipper are confirmed through processing at each step from the "Assign order" to the "End of dispatch processing".

### No. 5: Confirmation of dispatch at shipping companies

Here, a transportation arrangement confirmation sheet is prepared.

### No. 6: Confirmation of warehouse receipt and shipment plans

Here, a warehouse receipt and shipment plan is prepared.

### No. 7: Registration of actual truck numbers

The transportation arrangement center and the carrier companies confirm the actual vehicle numbers and notify the same to the warehouse companies.

### No. 8: Confirmation of shipment charges

The transportation arrangement center outputs shipment charge calculation sheets to the carrier companies on the web pages.

### No. 9: Maintenance of schedule master

When for example there are special days off etc. at the companies of the owners, this is notified in advance to the carrier companies and the warehouse companies. This is done through the web pages.

### No. 10: Notification of change of schedule to users

When for example a major earthquake etc. has occurred and normal work can no longer be continued, the carrier companies and the warehouse companies are notified of changes in the schedule. This is also done through the web pages.

### No. 11: Receiving warehouse location master

There are various agreements regarding the procedures and conditions of receipt at warehouses. In particular, a new carrier company has to become well acquainted with the procedures and conditions of receipt in advance or else work time will be lost. Further, the warehouse side sometimes suddenly changes the receipt procedures or conditions unilaterally. In such cases as well, the carrier companies have to be informed of the changes in advance. Such notifications can be quickly performed on the web pages.

The above operation is executed by the CPU (computer) shown in FIG. 2 in accordance with a program stored in the storage medium (MEM).

This program realizes at least the following functions (i) to (iii).

In a program for realizing a work flow processor provided in a work managing system constructed including a plurality of different work executing sites for executing work assigned to them in a work process,
(i) the function of systematically planning and setting the flows of execution of work to be assigned to a plurality of work executing sites 4 for the work process,
(ii) the function of instructing the progress of the set flows of execution and monitoring the progress of the flows of execution for each of the plurality of work executing sites 4 while linking them with each other, and
(iii) the function of exchanging managing information relating to the instructions and monitoring with the work executing sites 4.

As explained above, according to the work managing system based on the present invention and work flow processor for supporting the same, in managing work of so-called B-to-B transactions spanning a plurality of businesses, first, it is possible for the work to be reliably performed (reliability) and, second, the transmission of the work information is simple and easy and therefore the work can be managed easily while saving labor.

## Claims

1. A work managing system having
a plurality of different work executing sites for executing work assigned to them in a work process and
a work control site for instructing the progress of work and monitoring its progress to the plurality of work executing sites while linking them with each other, where
the work control site and the work executing sites exchange between those managing information relating to the instructions and monitoring through a communications network.

2. A work managing system as set forth in claim 1, wherein the work control site systematically plans and sets flows of execution of work to be assigned to the plurality of working executing sites for a work process and instructs the progress of the set flows of execution and monitors the progress of the flows of execution.

3. A work managing system as set forth in claim 2, wherein the work control site includes a work information displaying means for providing work information set for said work executing sites to the work executing sites, a notification displaying means for notifying the work executing sites of the work information, and a confirmation displaying means for confirming responses from work executing sites regarding notifications by said notification displaying means.

4. A work managing system as set forth in claim 3, wherein the work information is one or both of the content of the work and a work schedule relating to the progress of the work.

5. A work managing system as set forth in claim 3, wherein the communications network is the Internet and the notification by said notification displaying means and the confirmation by said confirmation displaying means are performed on web pages on the Internet.

6. A work managing system as set forth in claim 5, wherein the provision of the work information by the work information displaying means is performed on web pages in synchronization with the work information notified by the notification displaying means.

7. A work managing system as set forth in claim 6, wherein when there is a notification, this notification is informed by a signal of a mode of expression different from normal.

8. A work managing system as set forth in claim 6, wherein when there is provision of information, this provision of information is informed by a signal of a mode of expression different from normal.

9. A work managing system as set forth in claim 6, wherein the work control site displays in parallel the flows of execution assigned to all of the work executing sites and provides this in common to the web pages of the work executing sites.

10. A work managing system as set forth in claim 4, wherein, when there is a change in the work information, the work control site reports this change all at once to the work executing sites and simultaneously receives a plurality of responses when requesting responses from the work executing sites about the report.

11. A work managing system as set forth in claim 7, which contacts sites about the occurrence of any notification from the notification displaying means by a signal of a mode of expression different from normal, prompts the work executing site side to click on a "notify" part of the notification displaying means to further open a web page displaying the work information relating to that notification, and when necessary, prompts it to click on a "provide" part of the work information displaying means to further open a web page displaying the work information relating to the provision of information.

12. A work managing system as set forth in claim 8, which contacts sites about the occurrence of provision of information by the work information displaying means by a signal of a mode of expression different from normal and prompts the work executing site side to click on a "provide" part of the work information displaying means to further open a web page displaying the work information relating to the provision of information.

13. A work flow processor in a work managing system including a plurality of different work executing sites for executing work assigned to them for a work process,
said work flow processor in a work managing system **characterized by** being provided with a function of instructing the progress of work to the plurality of work executing sites and monitoring the progress while linking them with each other and a function of exchanging managing information relating to the instructions and monitoring with the work executing sites.

14. A work flow processor as set forth in claim 13, further provided with a setting means for systematically planning and setting flows of execution of work to be assigned to the plurality of work executing sites for said work process and an instructing/monitoring means for instructing the progress of the set flows of execution and monitoring the progress of the flows of execution.

15. A work flow processor as set forth in claim 14, further including a work information displaying means for providing work information set for said work executing sites to the work executing sites, a notification displaying means for notifying the work executing sites of the work information, and a confirmation displaying means for confirming responses from work executing sites to notifications by said notification displaying means.

16. A work flow processor as set forth in claim 15, wherein the work information is one or both of the content of the work and a work schedule relating to the progress of the work.

17. A work flow processor as set forth in claim 15, wherein the notification by said notification displaying means and the confirmation by said confirmation displaying means are performed on web pages on the Internet.

18. A work flow processor as set forth in claim 17, wherein the provision of the work information by the work information displaying means is performed on the web pages in synchronization with the work information notified by the notification displaying means.

19. A work flow processor as set forth in claim 18, which contacts sites about the occurrence of any notification by a signal of a mode of expression different from normal.

20. A work flow processor as set forth in claim 18, which contacts sites about the occurrence of any provision of information by a signal of a mode of expression different from normal.

21. A work flow processor as set forth in claim 18, which displays in parallel the flows of execution assigned to all of the work executing sites and provides this in common to the web pages of the work executing sites.

22. A work flow processor as set forth in claim 16, further provided with a function of reporting any change in the work information all at once to the work executing sites and a function of simultaneously receiving a plurality of responses when requiring responses from the work executing sites to that report.

23. A work flow processor as set forth in claim 19, which contacts sites about the occurrence of any notification from the notification displaying means by a signal of a mode of-expression different from normal, prompts the work executing site side to click on a "notify" part of the notification displaying means to further open a web page displaying the work information relating to that notification, and when necessary, prompts it to click on a "provide" part of the work information displaying means to further open a web page displaying the work information relating to the provision of information.

24. A work flow processor as set forth in claim 20, which contacts sites about the occurrence of provision of information by the work information displaying means by a signal of a mode of expression different from normal and prompts the work executing site side to click on a "provide" part of the work information displaying means to further open a web page displaying the work information relating to the provision of information.

25. A work flow messenger provided in a work managing system including a plurality of different work executing sites for executing work assigned to them for a work process, said work flow messenger in a work managing system **characterized by** including a work information displaying means for providing work information set for said work executing sites to the work executing sites, a notification displaying means for notifying the work executing sites of the work information, and a confirmation displaying means for confirming responses from work executing sites to notifications by said notification displaying means.

26. A work flow messenger as set forth in claim 25, wherein the work information is one or both of the content of the work and a work schedule relating to the progress of the work.

27. A work flow messenger as set forth in claim 25, wherein the notification by said notification displaying means and the confirmation by said confirmation displaying means are performed on web pages on the Internet.

28. A work flow messenger as set forth in claim 27, wherein the provision of the work information by the work information displaying means is performed on the web pages in synchronization with the work information notified by the notification displaying means.

29. A work flow messenger as set forth in claim 28, which contacts sites about the occurrence of any notification by a signal of a mode of expression different from normal.

30. A work flow messenger as set forth in claim 28, which contacts sites about the occurrence of any provision of information by a signal of a mode of expression different from normal.

31. A work flow messenger as set forth in claim 28, which displays in parallel the flows of execution assigned to all of the work executing sites and provides this in common to the web pages of the work executing sites.

32. A work flow messenger as set forth in claim 26, further provided with a function of reporting any change in the work information all at once to the work executing sites and a function of simultaneously receiving a plurality of response when requiring responses from the work executing sites to that report.

33. A work flow messenger as set forth in claim 29, which contacts sites about the occurrence of any notification from the notification displaying means by a signal of a mode of expression different from normal, prompts the work executing site side to click on a "notify" part of the notification displaying means to further open a web page displaying the work information relating to that notification, and when necessary, prompts it to click on a "provide" part of the work information displaying means to further open a web page displaying the work information relating to the provision of information.

34. A work flow messenger as set forth in claim 30, which contacts sites about the occurrence of provision of information by the work information displaying means by a signal of a mode of expression different from normal and prompts the work executing site side to click on a "provide" part of the work information displaying means to further open a web page displaying the work information relating to the provision of information.

35. A computer readable storage medium storing a program for realizing a work flow processor provided in a work managing system constructed including a plurality of different work executing sites for executing work assigned to them for a work process,
said program realizing
a function of systematically planning and setting flows of execution of work to be assigned to said plurality of work executing sites for said work process,
a function of instructing the progress of the set flows of execution and monitoring the progress of the flows of execution to the plurality of work executing sites while linking them with each other, and
a function of exchanging managing information relating to said instructions and monitoring with said work executing sites.

36. A method of display to a plurality of different work executing sites executing work assigned to them for a work process, comprising keeping the displays of the terminals continuously on and displaying the occurrence of any notification by a notification displaying means from a work control site to a work executing site by a signal of a mode of expression different from normal.

37. A method of display to terminals of a plurality of different work executing sites executing work assigned to them for a work process, comprising keeping the displays of the terminals continuously on and contacting sites about the occurrence of any notification by a notification displaying means from a work control site to a work executing site by a signal of a mode of expression different from normal, prompting the work executing site side to click on a "notify" part of the notification displaying means of the terminal to display work information relating to that notification, and, when necessary, prompting it to click on a "provide" part of a work information displaying means of the terminal to display the work information relating to the display.

38. A method of display to terminals of a plurality of different work executing sites executing work assigned to them for a work process, comprising keeping the displays of the terminals continuously on and displaying the occurrence of any provision of work information by a work information displaying means from a work control site to a work executing site by a signal of a mode of expression different from normal.

39. A method of display to terminals of a plurality of different work executing sites executing work assigned to them for a work process, comprising keeping the displays of the terminals continuously on and contacting sites about the occurrence of any provision of work information by a work information displaying means from a work control site to a work executing site by a signal of a mode of expression different from normal and prompting the work executing site side to click on a "provide" part of the work information displaying means of the terminal to display work information relating to that provision.

40. A web page provided continuously on terminals of a plurality of different work executing sites executing work assigned to them for a work process, said web page informing the occurrence of any notification by a notification displaying means from a work control site to a work executing site by a signal of a mode of expression different from normal.

41. A web page provided continuously on terminals of a plurality of different work executing sites for executing work assigned to them for a work process, said web page informing the occurrence of any notification by a notification displaying means from a work control site to a work executing site by a signal of a mode of expression different from normal, prompting said work executing site side to click on a "notify" part of the notification displaying means to display work information relating to that notification, and prompting it to click on a "provide" part of said work information displaying means to display the work information relating to the display.

42. A web page provided continuously on terminals of a plurality of different work executing sites executing work assigned to them for a work process, said web page informing the occurrence of any provision of work information by a work information displaying means from a work control site to a work executing site by a signal of a mode of expression different from normal.

43. A web page provided continuously on terminals of a plurality of different work executing sites for executing work assigned to them for a work process, said web page informing the occurrence of provision of work information by a work information displaying means from a work control site to a work executing site by a signal of a mode of expression different from normal and prompting said work executing site side to click on a "provide" part of said work information displaying means to display work information relating to said provision.

44. A work managing and control method for a work process including a plurality of different work executing sites executing work assigned to them and a work control site for instructing the progress of the work to the plurality of work executing sites and monitoring the progress while linking them with each other, said work managing and control method for a work process informing the occurrence of any notification of work information from the work control site to a work executing site on a web page of said work executing site by a signal of a mode of expression different from normal, prompting said work executing site to click on a "notify" part of a notification displaying means to further open a web page displaying work information relating to said notification, and prompting it to click on a "provide" part of a work information displaying means to further open up a web page displaying work information relating to that provision to thereby notify the work information to said work executing site and displaying a response from the work executing site on the web page of the work control site to allow the work control site to confirm the response.

45. A work managing and control method for a work process including a plurality of different work executing sites executing work assigned to them and a work control site for instructing the progress of the work to the plurality of work executing sites and monitoring the progress while linking them with each other, said work managing and control method for a work process informing the occurrence of any provision of work information from the work control site to a work executing site on a web page of said work executing site by a signal of a mode of expression different from normal and prompting said work executing site to click on a "provide" part of a work information displaying means to further open up a web page displaying work information relating to that provision.

46. A work managing and control method for a work process including a plurality of different work executing sites executing work assigned to them and a work control site for instructing the progress of the work and monitoring the progress to the plurality of work executing sites while linking them with each other, said work managing and control method for a work process having a work control site report any change in the work information all at once to the work executing sites and contact the sites about this notification by a signal of a mode of expression different from normal on web pages of the work executing sites, prompting the work executing sites to click on a "notify" part of a notification displaying means to further open a web page displaying the work information relating to that notification, and prompting them to further click on a "provide" part of a work information displaying means to further open a web page displaying the work information relating to the provision to thereby inform the change of the work information to the work executing sites and simultaneously receive a plurality of responses when requiring responses from the work executing sites to that report.
